(19) Europäisches Patentamt
European Patent Office
Office européen des brevets

(11) **EP 2 761 871 B1**

(12) **FASCICULE DE BREVET EUROPEEN**

(45) Date de publication et mention
de la délivrance du brevet:
**25.04.2018 Bulletin 2018/17**

(21) Numéro de dépôt: **12775748.2**

(22) Date de dépôt: **20.09.2012**

(51) Int Cl.:
*H04N 19/105* (2014.01)      *H04N 19/597* (2014.01)
*H04N 19/176* (2014.01)      *H04N 19/147* (2014.01)
*H04N 19/51* (2014.01)      *H04N 19/192* (2014.01)
*H04N 19/44* (2014.01)

(86) Numéro de dépôt international:
**PCT/FR2012/052103**

(87) Numéro de publication internationale:
**WO 2013/045794 (04.04.2013 Gazette 2013/14)**

(54) **ESTIMATION DE MOUVEMENT AU NIVEAU DU DÉCODEUR PAR MISE EN CORRESPONDANCE DE MODÈLES**

DEKODER-SEITIGE BEWEGUNGSCHÄTZUNG DURCH MUSTERVERGLEICH

DECODER SIDE MOTION ESTIMATION BASED ON TEMPLATE MATCHING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2011 FR 1158864**

(43) Date de publication de la demande:
**06.08.2014 Bulletin 2014/32**

(73) Titulaire: **Orange**
**75015 Paris (FR)**

(72) Inventeurs:
• **JUNG, Joël**
**F-78320 Le Mesnil Saint Denis (FR)**
• **THIESSE, Jean-Marc**
**F-92210 Saint-Cloud (FR)**

(56) Documents cités:
• UEDA M ET AL: "TE1: Refinement Motion Compensation using Decoder-side Motion Estimation", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SI T E/,, no. JCTVC-B032, 18 juillet 2010 (2010-07-18), XP030007612, ISSN: 0000-0048 cité dans la demande

• Y-W HUANG ET AL: "TE1: Decoder-side motion vector derivation with switchable template matching", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SI T E/,, no. JCTVC-B076, 23 juillet 2010 (2010-07-23), XP030007656, ISSN: 0000-0046

• KAMP S ET AL: "Multihypothesis prediction using decoder side-motion vector derivation in inter-frame video coding", VISUAL COMMUNICATIONS AND IMAGE PROCESSING; 20-1-2009 - 22-1-2009; SAN JOSE,, 20 janvier 2009 (2009-01-20), XP030081712,

• STEFFEN KAMP ET AL: "Improving AVC compression performance by template matching with decoder-side motion vector derivation", 84. MPEG MEETING; 28-4-2008 - 2-5-2008; ARCHAMPS; (MOTION PICTURE EXPERT GROUP OR ISO/IEC JTC1/SC29/WG11),, no. M15375, 25 avril 2008 (2008-04-25), XP030043972,

• SHINYA SHIMIZU ET AL: "Improved view synthesis prediction using decoder-side motion derivation for multiview video coding", 3DTV-CONFERENCE: THE TRUE VISION - CAPTURE, TRANSMISSION AND DISPLAY OF 3D VIDEO (3DTV-CON), 2010, IEEE, PISCATAWAY, NJ, USA, 7 juin 2010 (2010-06-07), pages 1-4, XP031706545, ISBN: 978-1-4244-6377-0

## Description

Domaine de l'invention

La présente invention se rapporte de manière générale au domaine du traitement d'images, et plus précisément au codage et au décodage d'images numériques et de séquences d'images numériques.

Plus précisément, l'invention s'applique à la compression d'images ou de séquences vidéo utilisant une représentation par blocs de la séquence vidéo.

L'invention peut notamment, mais non exclusivement, s'appliquer au codage vidéo mis en oeuvre dans les codeurs vidéo actuels et de leurs amendements (MPEG, H.264, H.264 SVC, H.264 MVC, etc) ou à venir (HEVC/H265), et au décodage correspondant.

Art antérieur

Les images et séquences d'images numériques occupent beaucoup d'espace en termes de mémoire, ce qui nécessite, lorsqu'on transmet ces images, de les compresser afin d'éviter les problèmes d'encombrement sur le réseau de communication utilisé pour cette transmission, le débit utilisable sur celui-ci étant généralement limité. Cette compression est également souhaitable en vue du stockage de ces données.

On connaît déjà de nombreuses techniques de compression de données vidéo. Parmi celles-ci, de nombreuses techniques de codages vidéo, notamment la technique H.264, utilisent des techniques de prédiction spatiale ou temporelle de groupes de blocs de pixels d'une image courante par rapport à d'autres groupes de blocs de pixels appartenant à la même image ou à une image précédente ou suivante.

Plus précisément, selon la technique H.264, des images I sont codées par prédiction spatiale (prédiction intra), et des images P et B sont codées par prédiction temporelle (prédiction inter) par rapport à d'autres images I, P ou B codées/décodées à l'aide d'une compensation en mouvement.

De telles images sont découpées généralement en macroblocs, eux-mêmes découpés en partitions comprenant un ensemble de pixels (par exemple 8x8). Pour chaque partition est codée une partition résiduelle, encore appelée résidu de prédiction, correspondant à la partition originale diminuée d'une prédiction. Après ce codage prédictif, les partitions résiduelles sont transformées par une transformée de type transformée en cosinus discrète (DCT), puis quantifiées. Les coefficients des partitions résiduelles quantifiées sont ensuite parcourus dans un ordre de lecture permettant d'exploiter le nombre important de coefficients nuls dans les hautes fréquences, puis codés par un codage entropique.

Conformément à l'invention, une partition peut consister en un bloc de forme généralement carrée ou rectangulaire, ou bien avoir d'autres formes, telle que linéaire, en forme de L, etc....

Selon la technique H.264 par exemple, lorsqu'un macrobloc est découpé en blocs, un signal de données, correspondant à chaque bloc, est transmis au décodeur. Un tel signal comprend :

- des données résiduelles qui sont les coefficients des blocs résiduels quantifiés et éventuellement, lors d'un codage en mode Inter, des données résiduelles des vecteurs mouvement,
- des paramètres de codage qui sont représentatifs du mode de codage utilisé, en particulier:

  ■ le mode de prédiction (prédiction intra, prédiction inter, prédiction par défaut réalisant une prédiction pour laquelle aucune information n'est transmise au décodeur (« en anglais « skip »));
  ■ des informations précisant le type de prédiction (orientation, image de référence, ...) ;
  ■ le type de partitionnement ;
  ■ le type de transformée, par exemple DCT 4x4, DCT 8x8, etc...
  ■ les informations de mouvement si nécessaire ;
  ■ etc.

Le décodage est fait image par image, et pour chaque image, macrobloc par macrobloc. Pour chaque partition d'un macrobloc, les éléments correspondants du signal sont lus. La quantification inverse et la transformation inverse des coefficients des partitions sont effectuées. Puis, la prédiction de la partition est calculée et la partition est reconstruite en ajoutant la prédiction au résidu de prédiction décodé.

Le codage intra ou inter par compétition, tel que mis en oeuvre dans la norme H.264, repose ainsi sur la mise en compétition de différents paramètres de codage, tels que ceux précités, dans le but de sélectionner le meilleur mode de codage, c'est-à-dire celui qui optimisera le codage de la partition considérée selon un critère de performance prédéterminé, par exemple le coût débit/distorsion bien connu de l'homme du métier.

Les paramètres de codage relatifs au mode de codage sélectionné sont contenus dans le signal de données transmis par le codeur au décodeur, sous la forme d'identifiants appelés généralement indices de compétition. Le décodeur est ainsi capable d'identifier le mode de codage sélectionné au codeur, puis d'appliquer la prédiction conforme à ce mode.

Plusieurs solutions ont été proposées pour tenter de réduire le coût de signalisation de tels indices.

Par exemple, dans le document WO 2009/071803, il est proposé, dans le cas où le codage est effectué selon un mode de prédiction Inter, de reproduire au décodeur la prédiction de mouvement qui est mise en oeuvre au codeur. Ainsi, les prédicteurs de mouvement, tels que par exemple des vecteurs de mouvement (traduction française de « motion vector »), n'ont pas besoin d'être transmis par le codeur au décodeur.

Lors du codage d'une partition courante selon le mode précité, il est généralement proposé de sélectionner par compétition au moins un prédicteur de vecteur de mouvement en utilisant la technique de « template matching ». Cette technique est ensuite mise en oeuvre au décodeur, dans le but de ne pas transmettre dans le flux codé d'informations de mouvement dont le coût de signalisation est élevé. La technique de « template matching » consiste à comparer l'intensité des pixels de la partition courante avec l'intensité des pixels d'une ou plusieurs partitions causales déjà codées puis décodées, à sélectionner le vecteur mouvement pointant vers la partition causale dont l'intensité des pixels est la plus proche de l'intensité des pixels de la partition courante, puis à prédire le vecteur mouvement ainsi sélectionné. Un inconvénient de cette technique est que l'appariement effectué entre la partition courante et la partition causale sélectionnée est limité à une comparaison de l'intensité des pixels et ne tient pas compte d'une inadéquation de taille ou de forme par exemple, qui pourrait exister entre la partition courante à coder (respectivement à décoder) et la partition causale. Par ailleurs, les partitions causales mises en compétition selon cette technique sont toujours celles situées dans certaines directions prédéterminées par rapport à la partition courante à coder, c'est-à-dire généralement au dessus et à gauche de la partition courante. Il en résulte une prédiction peu précise de la partition courante qui entraîne des erreurs non négligeables lors du codage/ décodage de la partition courante. Dans la plupart des cas, du fait que cette technique altère la précision de la prédiction de mouvement, il est nécessaire, pour compenser ce défaut de précision, de transmettre au décodeur des données résiduelles de texture qui sont très coûteuses en termes de débit.

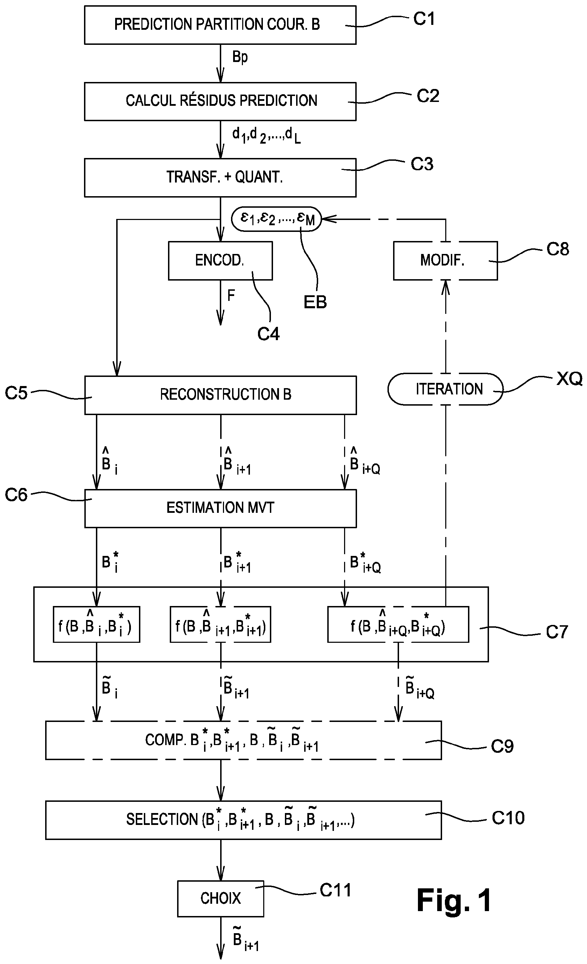

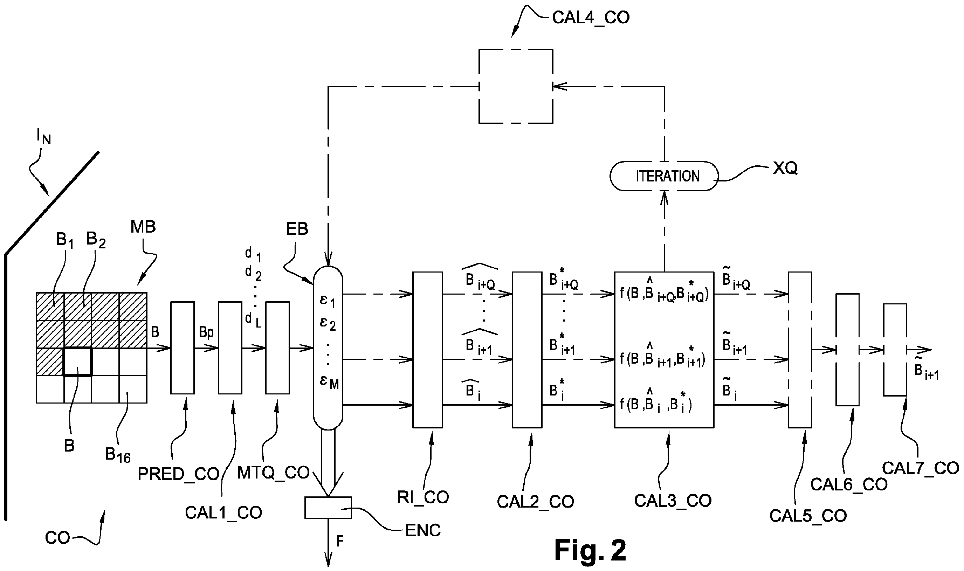

Dans l'article M. Ueda, S. Fukushima : « TE1: Refinement Motion Compensation using Decoder-side Motion Estimation», JCTVC-B032, Geneva, July 2010, plus particulièrement en référence aux figures 1 et 2 de ce dernier, il est proposé au codeur d'effectuer une première prédiction de mouvement d'un bloc, puis de raffiner le bloc compensé en mouvement obtenu à l'issue de ladite première prédiction, au moyen d'une seconde prédiction de mouvement mise en oeuvre au décodeur. Un tel bloc raffiné en mouvement est appelé bloc RMC (de l'anglais « Refinement Motion Compensation »). Le bloc RMC est obtenu par calcul d'une moyenne appliquée à la fois sur la première prédiction et sur la deuxième. La seconde estimation de mouvement est effectuée en sélectionnant comme cible ledit bloc compensé en mouvement (« Uni-Predictive MC » block) qui a été signalé dans le flux transmis au décodeur.

Bien que cette technique permette de réduire le coût de signalisation des informations de mouvement, la première estimation de mouvement effectuée au codeur n'est pas toujours optimale, ce qui nuit forcément à la seconde estimation de mouvement effectuée au décodeur, laquelle dépend du résultat de cette première estimation de mouvement. Il en résulte que le bloc RMC obtenu au décodeur n'est pas suffisamment corrélé en termes de texture et de mouvement.

Objet et résumé de l'invention

Un des buts de l'invention est de remédier à des inconvénients de l'état de la technique précité.

A cet effet, un objet de la présente invention concerne un procédé de décodage d'un signal de données représentatif d'au moins une image courante découpée en partitions, conformément à l'objet de la revendication 1. La partition reconstruite à laquelle est appliquée l'estimation de mouvement a subi une reconstruction conformément à un mode de prédiction donné et à l'aide de données résiduelles de texture éventuelles. Selon l'invention, le mode de prédiction est soit lu dans le signal de données codé, soit déterminé au décodeur. Cette dernière alternative présente l'avantage de réduire le coût de signalisation.

La partition reconstruite ainsi obtenue à l'issue de ladite prédiction est avantageusement « raffinée » par mise en oeuvre d'une estimation de mouvement permettant de déterminer une partition causale qui soit la plus ressemblante possible de la partition reconstruite en termes de texture. L'estimation de mouvement appliquée à la partition reconstruite consiste par exemple dans le calcul d'un vecteur mouvement qui décrit le mouvement entre la partition reconstruite et la partition causale déterminée. Cette partition causale étant utilisée pour « raffiner » la partition reconstruite, il en résulte l'obtention d'une partition reconstruite de manière plus efficace et plus précise que dans l'art antérieur précité, nécessitant en outre un nombre minimal de données résiduelles.

Selon un mode de réalisation particulier, la moyenne précitée est appliquée sur tous les pixels de la partition causale déterminée ou bien sur un sous-ensemble de ces pixels, ainsi que respectivement sur tous les pixels correspondants de la partition courante reconstruite ou bien sur un sous-ensemble correspondant de ces pixels.

Une telle disposition permet d'optimiser la précision du raffinement de la partition reconstruite, puisque selon une première alternative tous les pixels de la partition causale déterminée et tous les pixels correspondants de la partition reconstruite sont considérés. Par ailleurs, selon la deuxième alternative, le fait de n'avoir à considérer qu'un sous-ensemble de pixels à la fois pour la partition causale déterminée et la partition reconstruite permet de réduire le temps de traitement au décodeur pour effectuer la comparaison entre la partition causale déterminée et la partition courante reconstruite, tout en maintenant quand même un degré de précision élevée du raffinement de la partition courante reconstruite. Cette deuxième alternative permet par ailleurs de raffiner uniquement des zones bien choisies, tout en conservant les pixels reconstruits avec la prédiction initiale dans les zones restantes.

Selon un autre mode de réalisation particulier, la partition causale déterminée est recherchée dans une partie décodée de l'image courante ou bien dans une autre image ayant déjà été décodée.

Une telle disposition permet ainsi de mettre en oeuvre l'invention dans le cadre du décodage d'une image en deux dimensions utilisant aussi bien un mode de prédiction Intra qu'un mode de prédiction Inter.

Selon une variante de cet autre mode de réalisation, l'autre image déjà décodée est une image antérieure ou postérieure à l'image courante.

Une telle disposition permet ainsi de mettre en oeuvre l'invention dans le cadre du décodage d'une image en deux dimensions utilisant aussi bien un schéma uni-prédictif que bi-prédictif.

Selon encore un autre mode de réalisation particulier, dans le cas où l'image courante comprend une pluralité de vues représentant respectivement une même scène, la partition causale déterminée est recherchée dans une vue déjà décodée de l'image courante ou d'une autre image déjà décodée.

Une telle disposition permet ainsi de mettre en oeuvre l'invention dans le cadre du décodage d'une image en trois dimensions qui a été codée par exemple conformément au standard MVC (abréviation anglaise de « Multiview Video Coding »).

La présente invention concerne également un procédé de codage d'au moins une image découpée en partitions, conformément a l'objet de la revendication 6.

Ledit procédé de codage présente les mêmes avantages que le procédé de décodage précité.

Selon un mode de réalisation particulier, un ensemble de données résiduelles étant obtenu à la suite de l'étape de prédiction par comparaison de données relatives à la partition courante et à la partition prédite, le procédé met en oeuvre, après la délivrance de la partition courante reconstruite modifiée, les étapes suivantes :

- modification d'au moins une des données résiduelles de l'ensemble précité, délivrant un ensemble de données résiduelles modifié,
- reconstruction de la partition courante à partir de la partition courante prédite et de l'ensemble de données résiduelles modifié, délivrant une nouvelle partition courante reconstruite,
- détermination d'au moins une nouvelle partition causale déjà codée puis décodée à l'aide d'une estimation de mouvement appliquée à la nouvelle partition courante reconstruite,
- modification de la nouvelle partition courante reconstruite par calcul d'une moyenne appliquée à la fois sur la nouvelle partition causale déterminée et sur la nouvelle partition courante reconstruite, délivrant une nouvelle partition courante reconstruite modifiée,
- comparaison, selon un critère de similitude prédéterminé, entre au moins deux partitions choisies parmi la partition causale déterminée, la nouvelle partition causale déterminée, la partition courante, la partition courante reconstruite modifiée, la nouvelle partition courante reconstruite modifiée.

La modification apportée à au moins une des données résiduelles de l'ensemble précité permet d'engendrer au codage une dégradation contrôlée du signal à transmettre au décodeur, pour éviter d'inclure dans le signal à destination du décodeur toutes les données résiduelles issues de la prédiction ou, à tout le moins, toutes les données résiduelles à leur valeur initiale la plus élevée. Il en résulte une diminution significative du coût de signalisation. En outre, l'itération des étapes caractéristiques du procédé de codage précité sur la base d'un ensemble de données résiduelles modifié permet de s'assurer que la modification effectuée n'est pas pénalisante en termes de qualité de reconstruction. Il est ainsi possible de choisir la meilleure modification non pénalisante.

Selon un autre mode de réalisation particulier, à la suite de l'étape de comparaison précitée, le procédé de codage met en oeuvre les étapes suivantes :

- au moins une itération des étapes de modification d'au moins une desdites données résiduelles, de reconstruction de la partition courante, de détermination d'au moins une nouvelle partition causale, de modification d'une nouvelle partition reconstruite, et de comparaison de partitions,
- sélection d'une pluralité de partitions qui répondent le mieux au critère de similitude,
- choix d'une partition parmi la pluralité de partitions sélectionnées, selon un critère de performance de codage prédéterminé.

Une telle disposition permet d'optimiser la diminution du coût de signalisation sans pour cela nuire à la qualité de la reconstruction de l'image.

L'invention concerne également un dispositif de décodage selon l'objet de la revendication 9 et un dispositif de codage selon l'objet de la revendication 10. Selon un mode de réalisation particulier, le dispositif de codage comprend en outre :

- des moyens de comparaison de données relatives à la partition courante à coder et à la partition prédite, de façon à déterminer un ensemble de données résiduelles,
- des moyens de modification d'au moins une des données résiduelles de l'ensemble, délivrant un ensemble de données résiduelles modifié,
- les moyens de reconstruction précités étant activés pour reconstruire la partition courante à partir de la partition courante prédite et de l'ensemble de données résiduelles modifié, délivrant une nouvelle partition courante reconstruite,

- les moyens de détermination étant activés pour déterminer au moins une nouvelle partition causale déjà codée puis décodée à l'aide d'une estimation de mouvement appliquée à la nouvelle partition courante reconstruite,
- les moyens de modification de partition courante reconstruite étant activés pour modifier la nouvelle partition courante reconstruite par calcul d'une moyenne appliquée à la fois sur la nouvelle partition causale déterminée, délivrant une nouvelle partition courante reconstruite modifiée,
- des moyens de comparaison aptes à comparer au moins deux partitions entre elles, selon un critère de similitude prédéterminé, les partitions étant choisies parmi la partition causale déterminée, la nouvelle partition causale déterminée, la partition courante, la partition courante reconstruite modifiée, la nouvelle partition courante reconstruite modifiée.

L'invention concerne encore un programme d'ordinateur comportant des instructions pour mettre en oeuvre le procédé de codage ou le procédé de décodage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé de codage ou du procédé de décodage selon l'invention, tels que décrits ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Le dispositif de décodage et le programme d'ordinateur correspondant précité présentent au moins les mêmes avantages que ceux conférés par le procédé de décodage selon la présente invention.

Le dispositif de codage et le programme d'ordinateur correspondant précité présentent au moins les mêmes avantages que ceux conférés par le procédé de codage selon la présente invention.

## Brève description des dessins

D'autres caractéristiques et avantages apparaîtront à la lecture de modes de réalisation préférés décrits en référence aux figures dans lesquelles:

- la figure 1 représente des étapes du procédé de codage selon l'invention,
- la figure 2 représente un mode de réalisation d'un dispositif de codage selon l'invention,
- la figure 3 représente un mode de réalisation d'un dispositif de décodage selon l'invention,
- la figure 4 représente des étapes du procédé de décodage selon l'invention,
- les figures 5A à 5D représentent des exemples d'estimation de mouvement appliquée à la partition courante reconstruite.

## Description détaillée du principe général de l'invention

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C11, représentées à la **figure 1.**

Selon le mode de réalisation de l'invention, le procédé de codage selon l'invention est implémenté dans un dispositif de codage CO représenté à la **figure 2.**

Au cours d'une étape C1 représentée à la **figure 1,** il est procédé, de façon connue en soi, à la prédiction d'une partition courante, notée B sur la **figure 2,** à partir d'au moins une partition causale recherchée parmi une pluralité de partitions causales disponibles, c'est-à-dire une partition préalablement codée puis décodée. Comme représenté sur la **figure 2,** la partition B appartient à un macrobloc courant MB d'une image $I_N$ qui a été découpée préalablement en une pluralité de partitions.

Il convient de noter qu'au sens de l'invention, le terme « partition » signifie unité de codage (de l'anglais « coding unit »). Cette dernière terminologie est notamment utilisée dans la norme HEVC/H.265, par exemple dans le document accessible à l'adresse Internet suivante : http://phenix.int-evry.fr/jct/doc_end_user/current_document.php?id=3286

En particulier, une telle unité de codage regroupe des ensembles de pixels de forme rectangulaire ou carrée, encore appelés blocs, macroblocs, ou bien des ensembles de pixels présentant d'autres formes géométriques.

La prédiction mise en oeuvre à l'étape C1 est conforme à un mode de prédiction qui est déterminé au codeur, tel que par exemple un mode Intra ou bien un mode Inter, au moyen d'un sous-module logiciel de calcul PRED_CO, représenté à la **figure 2.**

De façon connue en tant que telle et à titre d'exemple non limitatif, l'étape de prédiction C1 consiste, par exemple en mode Inter, à rechercher une pluralité de partitions causales candidates. La méthode de recherche est par exemple basée sur les corrélations entre les partitions causales candidates et la partition courante B à reconstruire. Les partitions causales candidates sont sélectionnées par exemple en fonction d'une minimisation d'erreur quadratique ou absolue entre une partition causale candidate considérée et la partition courante B. La partition causale dont la minimisation d'erreur quadratique ou absolue est la plus élevée est alors sélectionnée pour prédire la partition courante B à reconstruire.

A l'issue de l'étape C1, une partition courante Bp prédite est obtenue.

Au cours d'une étape C2 représentée à la **figure 1,** un premier module logiciel de calcul CAL1_CO, représenté à la **figure 2,** détermine un ensemble de résidus $d_1$, $d_2$, ..., $d_L$, par comparaison des données relatives à la partition courante B aux données relatives à la partition courante prédite obtenue Bp.

Au cours d'une étape C3 représentée à la **figure 1,** lesdits résidus déterminés sont envoyés à un module MTQ_CO de transformée et de quantification représenté à la **figure 2,** pour subir une transformée, par exemple en cosinus discrètes, puis une quantification.

On suppose que pour la partition courante prédite Bp, un ensemble EB de M données résiduelles transformées et quantifiées sont obtenues à l'issue de l'étape C3. De telles données résiduelles transformées et quantifiées sont des coefficients notés par exemple $\varepsilon_1$, $\varepsilon_2$,...,$\varepsilon_M$.

Au cours d'une étape C4, il est procédé à l'encodage de tous les coefficients $\varepsilon_1$, $\varepsilon_2$,...,$\varepsilon_M$, de la même façon que dans l'état de l'art.

Un signal de données F est alors délivré à l'issue de l'étape C4.

Un tel encodage est effectué par un encodeur ENC tel que représenté à la **figure 2.** Un tel encodeur est par exemple conforme à la norme H.264/MPEG-4 AVC.

Au cours d'une étape C5, la partition courante B est alors reconstruite par addition, à la partition courante prédite Bp, des coefficients $\varepsilon_1$, $\varepsilon_2$,..., $\varepsilon_M$. Une telle étape est mise en oeuvre au moyen d'un module logiciel de reconstruction RI_CO conforme à la norme H.264/MPEG-AVC. Un tel module de reconstruction est représenté sur la **figure 2.**

A l'issue de l'étape C5, une partition courante reconstruite $\hat{B}_i$ est obtenue, où i est un entier supérieur ou égal à 0.

Conformément à l'invention, au cours d'une étape C6 représentée à la **figure 1,** il est procédé à la détermination d'au moins une partition causale $B^*_i$ déjà codée puis décodée, à l'aide d'une estimation de mouvement appliquée à la partition reconstruite $\hat{B}_i$. Différents exemples d'estimation de mouvement seront décrits ultérieurement dans la description. Une telle étape est mise en oeuvre par un deuxième module logiciel de calcul CAL2_CO tel que représenté sur la **figure 2.**

L'étape C6 est suivie d'une étape C7 représentée à la **figure 1,** au cours de laquelle il est procédé à la modification de ladite partition courante reconstruite $\hat{B}_i$ par calcul d'une fonction f appliquée au moins à la fois sur ladite partition causale déterminée $B^*_i$ et sur ladite partition courante reconstruite $\hat{B}_i$. Une telle étape est mise en oeuvre par un troisième module logiciel de calcul CAL3_CO, tel que représenté sur la **figure 2,** lequel sélectionne dans une base de données (non représentée) du codeur CO la fonction la plus adaptée aux contenus respectifs d'au moins la partition causale déterminée $B^*_i$ et ladite partition courante reconstruite $\hat{B}_i$.

Dans l'exemple représenté sur les **figures 1** et **2,** la fonction f est appliquée à la fois sur la partition courante B, sur la partition causale déterminée $B_i^*$ et sur la partition courante reconstruite $\hat{B}_i$.

Selon un premier exemple de réalisation, une telle fonction consiste par exemple en une moyenne effectuée entre le premier pixel de la partition causale déterminée $B^*_i$ et le premier pixel de la partition courante reconstruite $\hat{B}_i$, puis entre le deuxième pixel de la partition causale déterminée $B^*_i$ et le deuxième pixel de la partition courante reconstruite $\hat{B}_i$, et ainsi de suite jusqu'au dernier pixel de la partition causale déterminée $B^*_i$ et de la partition courante reconstruite $\hat{B}_i$.

En variante, une telle moyenne peut être effectuée sur une pluralité P ($P \geq 2$) de pixels correspondants. Par exemple, la fonction peut consister en une moyenne effectuée entre les deux premiers pixels de la partition causale déterminée $B^*_i$ et les deux premiers pixels correspondants de la partition courante reconstruite $\hat{B}_i$, puis entre les deux pixels suivants de la partition causale déterminée $B^*_i$ et les deux pixels suivants correspondants de la partition courante reconstruite $\hat{B}_i$, et ainsi de suite jusqu'aux deux derniers pixels de la partition causale déterminée $B^*_i$ et aux deux derniers pixels correspondants de la partition courante reconstruite $\hat{B}_i$.

Selon un deuxième mode de réalisation, la fonction prend en compte seulement une partie des pixels de la partition causale $B^*_i$ et seulement une partie des pixels correspondants de la partition courante reconstruite $\hat{B}_i$. A cet effet, il est procédé à une comparaison entre la matrice des données résiduelles $\varepsilon_1$, $\varepsilon_2$,...,$\varepsilon_M$ ayant servies à la reconstruction de la partition courante B et la matrice des données résiduelles $\varepsilon^*_1$, $\varepsilon^*_2$,...,$\varepsilon^*_P$ ayant servies à la reconstruction de la partition causale $B^*_i$.

A l'issue de l'étape C7, une partition courante reconstruite modifiée $\hat{B}_i$ est obtenue. Une telle partition consiste avantageusement en un raffinement de la par-

tition reconstruite $\hat{B}_i$ en termes de texture.

Selon une mode de réalisation optionnel et qui pour cette raison est représenté en traits interrompus sur les **figures 1** et **2**, le procédé de codage met en oeuvre les étapes supplémentaires suivantes.

Au cours d'une étape C8 représentée à la **figure 1**, il est procédé à une modification de l'ensemble EB de données résiduelles $\varepsilon_1$, $\varepsilon_2$,...,$\varepsilon_M$. Une telle modification consiste par exemple soit à mettre à 0 une ou plusieurs desdites données résiduelles $\varepsilon_1$, $\varepsilon_2$,...,$\varepsilon_M$, soit à modifier à une valeur non nulle la valeur d'une ou plusieurs desdites données résiduelles $\varepsilon_1$, $\varepsilon_2$,...,$\varepsilon_M$. Ladite étape C8 est mise en oeuvre par un quatrième module logiciel de calcul CAL4_CO représenté à la **figure 2**.

L'étape de reconstruction C5 est à nouveau mise en oeuvre à partir dudit ensemble modifié de données résiduelles. Une nouvelle partition reconstruite $\hat{B}_{i+1}$ est alors délivrée à l'issue de cette étape.

L'étape C6 de détermination de partition causale est ensuite à nouveau mise en oeuvre, une nouvelle partition causale $B^*_{i+1}$ déjà codée puis décodée étant alors déterminée à l'aide d'une estimation de mouvement appliquée à la nouvelle partition courante reconstruite $\hat{B}_{i+1}$.

L'étape C7 de modification de partition est ensuite à nouveau mise en oeuvre relativement à la nouvelle partition courante reconstruite $\hat{B}_{i+1}$ par calcul d'une fonction appliquée à la fois sur ladite nouvelle partition causale déterminée $B^*_{i+1}$ et sur ladite nouvelle partition courante reconstruite $\hat{B}_{i+1}$, délivrant une nouvelle partition courante reconstruite modifiée $\tilde{B}_{i+1}$.

Au cours d'une étape C9 représentée à la **figure 1**, il est procédé à une comparaison, selon un critère de similitude prédéterminé, entre au moins deux partitions choisies parmi la partition causale déterminée $B^*_i$, la nouvelle partition causale déterminée $B^*_{i+1}$, la partition courante B, la partition courante reconstruite modifiée $\tilde{B}_i$, et la nouvelle partition courante reconstruite modifiée $\tilde{B}_{i+1}$. Ladite étape C9 est mise en oeuvre par un cinquième module logiciel de calcul CAL5_CO représenté à la **figure 2**.

Selon un premier mode de réalisation, un tel critère de similitude peut consister à effectuer une corrélation entre la partition courante B, la partition causale déterminée $B^*_i$, la nouvelle partition causale déterminée $B^*_{i+1}$, la partition courante reconstruite modifiée $\tilde{B}_i$, la nouvelle partition courante reconstruite modifiée $\tilde{B}_{i+1}$. De façon connue en soi, une telle corrélation consiste par exemple à calculer l'erreur quadratique (en anglais : « Sum of Squared Différences ») ou absolue (en anglais : « Sum of Absolute Différences ») :

- entre chaque premier pixel de la partition courante B, de la partition causale déterminée $B^*_i$, de la nouvelle partition causale déterminée $B^*_{i+1}$, de la partition courante reconstruite modifiée $\tilde{B}_i$, et de la nouvelle partition courante reconstruite modifiée $\tilde{B}_{i+1}$,
- puis entre chaque deuxième pixel de la partition courante B, de la partition causale déterminée $B^*_i$, de la nouvelle partition causale déterminée $B^*_{i+1}$, de la partition courante reconstruite modifiée $\tilde{B}_i$, et de la nouvelle partition courante reconstruite modifiée $\tilde{B}_{i+1}$, et ainsi de suite jusqu'au dernier pixel de chacune desdites partitions considérées.

En variante, un tel calcul peut être effectué sur les P premiers pixels de chacune desdites partitions précitées, P étant un entier, tel que $P \geq 2$.

Selon un deuxième mode de réalisation, un tel critère de similitude peut consister à évaluer la distorsion entre la partition courante B, la partition causale déterminée $B^*_i$, la nouvelle partition causale déterminée $B^*_{i+1}$, la partition courante reconstruite modifiée $\tilde{B}_i$, et la nouvelle partition courante reconstruite modifiée $\tilde{B}_{i+1}$.

Selon un troisième mode de réalisation, un tel critère de similitude peut consister à évaluer la différence entre le coût en bits du codage de la partition courante B, de la partition causale déterminée $B^*_i$, de la nouvelle partition causale déterminée $B^*_{i+1}$, de la partition courante reconstruite modifiée $\tilde{B}_i$, et de la nouvelle partition courante reconstruite modifiée $\tilde{B}_{i+1}$.

Au cours d'une étape C10 représentée à la **figure 1**, il est procédé à une sélection d'une ou plusieurs des partitions comparées qui répondent le mieux au critère de similitude. Ladite étape C10 est mise en oeuvre par un sixième module logiciel de calcul CAL6_CO représenté à la **figure 2**.

Dans le cas où le critère de similitude est conforme au premier mode de réalisation, sont conservées uniquement les partitions pour lesquelles l'erreur quadratique ou absolue qui a été calculée est inférieure à un seuil prédéterminé.

Dans le cas où le critère de similitude est conforme au deuxième mode de réalisation, sont conservées uniquement les partitions pour lesquelles la distorsion qui a été évaluée est inférieure à un seuil prédéterminé.

Dans le cas où le critère de similitude est conforme au troisième mode de réalisation, sont conservées uniquement les partitions pour lesquelles le coût en bits de codage qui a été calculé est inférieur à un seuil prédéterminé.

Dans le cas où plusieurs des partitions comparées ont été sélectionnées, il est procédé, au cours d'une étape C11 représentée à la **figure 1**, au choix d'une partition, selon un critère de performance de codage prédéterminé, tel que par exemple le critère débit-distorsion bien connu de l'homme du métier. Un tel critère s'exprime par l'équation (1) ci-dessous :

$$(1) \quad J = D + \lambda R$$

où D représente la distorsion entre la partition originale et la partition reconstruite, R représente le coût en bits du codage des paramètres de codage et À représente un multiplicateur de Lagrange.

Ladite étape C11 est mise en oeuvre par un septième module logiciel de calcul CAL7_CO représenté à la **figure 2.**

Dans l'exemple représenté, c'est la partition reconstruite modifiée $\tilde{B}_{i+1}$ qui est choisie.

Compte tenu de ce choix, ce sont les données résiduelles modifiées à l'issue de l'étape C8 précitée qui sont finalement encodées dans le signal de données F. Le coût de signalisation s'en trouve donc avantageusement réduit.

Comme représenté sur les **figures 1** et **2,** l'enchaînement successif des étapes C8, C5, C6, C7, C9, C10, C11, C4 peut être itéré Q fois de façon à optimiser la réduction du coût de signalisation sans nuire à la qualité de la reconstruction de la partition courante B.

Le procédé de codage qui vient d'être décrit ci-dessus est bien sûr mis en oeuvre pour chacune des partitions du macrobloc courant MB qui suivent la partition courante B.

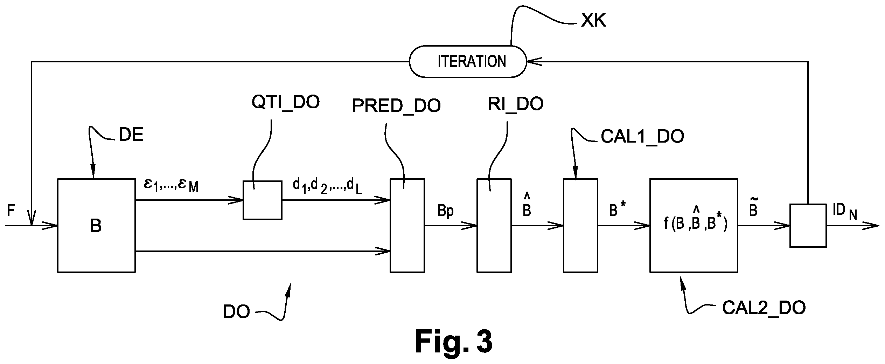

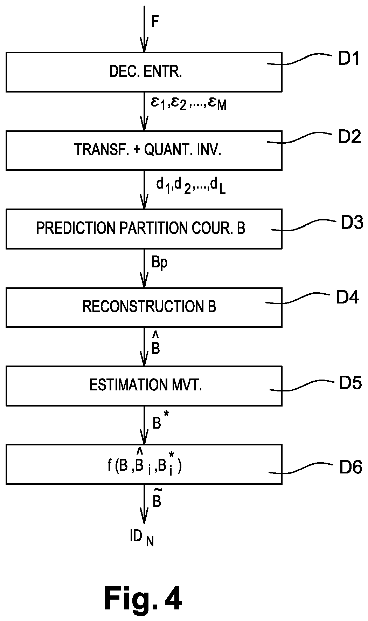

Le signal de données F est ensuite transmis au moyen d'une interface de transmission (non représentée) du codeur CO, via un réseau de communication, à un terminal distant. Celui-ci comporte un décodeur DO tel que représenté à la **figure 3.** Le décodeur DO met alors en oeuvre des étapes D1 à D6 du procédé de décodage selon l'invention, telle que représentées à la **figure 4.**

Un tel procédé de décodage selon l'invention est également implémenté de manière logicielle ou matérielle par modifications d'un décodeur initialement conforme à la norme H.264/MPEG-4 AVC.

Le signal F est d'abord envoyé à un module logiciel de décodage entropique DE représenté sur la **figure 3.** Ce dernier effectue, au cours d'une étape D1 représentée à la **figure 4,** un décodage inverse de celui effectué par l'encodeur ENC représenté à la **figure 2.**

Puis, pour une partition courante à reconstruire B, les coefficients décodés $\varepsilon_1$, $\varepsilon_2$, ...., $\varepsilon_M$, s'ils existent, sont envoyés à un module QTI_DO de quantification inverse et de transformée inverse qui, au cours d'une étape D2 représentée à la **figure 4,** délivre les résidus $d_1$, $d_2$,..., $d_L$ obtenus à l'étape de codage C2 précitée.

Au cours d'une étape D3 représentée à la **figure 4,** il est procédé à la prédiction de la partition courante B à reconstruire à partir d'au moins une partition causale $B^r$ déjà décodée. Une telle étape est effectuée classiquement par un sous-module logiciel de prédiction PRED_DO représenté sur la **figure 3.**

Le type de prédiction à utiliser est soit lu dans le signal de données F, soit reproduit au décodeur.

De façon connue en tant que telle et à titre d'exemple non limitatif, l'étape de prédiction D3 consiste à rechercher une pluralité de partitions causales candidates $B^r_1$, $B^r_2$,..., $B^r_c$,...,$B^r_C$(c étant un entier tel que $1 \leq c \leq C$). La méthode de recherche est par exemple basée sur les corrélations entre les partitions causales candidates et la partition courante B à reconstruire. Les partitions causales candidates sont sélectionnées par exemple en fonction d'une minimisation d'erreur quadratique ou absolue entre une partition causale candidate considérée et la partition courante B. La partition causale $B^r_c$ dont la minimisation d'erreur quadratique ou absolue est la plus élevée est alors sélectionnée pour prédire la partition courante B à reconstruire. A l'issue de l'étape D3, une partition courante Bp prédite est obtenue.

Au cours d'une étape D4, la partition courante B est alors reconstruite par addition, à la partition courante prédite Bp, et, si elles existent, des données résiduelles $d_1$, $d_2$,...,$d_L$ délivrées par le module QTI_DO de quantification inverse et de transformée inverse, tel que représenté sur la **figure 3.** Une telle étape est mise en oeuvre au moyen d'un module logiciel de reconstruction RI_DO conforme à la norme H.264/MPEG-AVC.

A l'issue de l'étape D4, une partition courante reconstruite $\hat{B}$ est obtenue.

Conformément à l'invention, au cours d'une étape D5 représentée à la **figure 4,** il est procédé à la détermination d'au moins une partition causale B* déjà décodée à l'aide d'une estimation de mouvement appliquée à la partition reconstruite $\hat{B}$. Différents exemples d'estimation de mouvement seront décrits ultérieurement dans la description. Une telle étape est mise en oeuvre par un premier module logiciel de calcul CAL1_DO tel que représenté sur la **figure 3.**

L'étape D5 est suivie d'une étape D6 représentée à la **figure 4,** au cours de laquelle il est procédé à une modification de ladite partition courante reconstruite $\hat{B}$ par calcul d'une fonction appliquée à la fois sur ladite partition causale déterminée B* et sur ladite partition courante reconstruite $\hat{B}$ . Une telle étape est mise en oeuvre par un second module logiciel de calcul CAL2_DO tel que représenté sur la **figure 3,** lequel sélectionne dans une base de données (non représentée) du décodeur DO la fonction la plus adaptée aux contenus respectifs de la partition causale déterminée B* et de ladite partition courante reconstruite $\hat{B}$.

Dans l'exemple représenté sur les **figures 3** et **4,** la fonction f est appliquée à la fois sur la partition courante B, sur la partition causale déterminée B* et sur la partition courante reconstruite $\hat{B}$.

Selon un premier exemple de réalisation, une telle fonction consiste par exemple en une moyenne effectuée entre le premier pixel de la partition causale déterminée B* et le premier pixel de la partition courante reconstruite $\hat{B}$, puis entre le deuxième pixel de la partition causale déterminée B* et le deuxième pixel de la partition courante reconstruite $\hat{B}$, et ainsi de suite jusqu'au dernier pixel de la partition causale déterminée B* et de la partition courante reconstruite $\hat{B}$.

En variante, une telle moyenne peut être effectuée sur une pluralité P ($P \geq 2$) de pixels correspondants. Par exemple, la fonction peut consister en une moyenne effectuée entre les deux premiers pixels de la partition causale déterminée B* et les deux premiers pixels correspondants de la partition courante reconstruite $\hat{B}$, puis entre les deux pixels suivants de la partition causale déterminée B* et les deux pixels suivants correspondants de la partition courante reconstruite $\hat{B}$, et ainsi de suite jusqu'aux deux derniers pixels de la partition causale déterminée B* et aux deux derniers pixels correspondants de la partition courante reconstruite $\hat{B}$.

Selon un deuxième mode de réalisation, la fonction prend en compte seulement une partie des pixels de la partition causale B* et seulement une partie des pixels correspondants de la partition courante reconstruite $\hat{B}$. A cet effet, il est procédé à une comparaison entre la matrice des données résiduelles $\varepsilon_1$, $\varepsilon_2$,...,$\varepsilon_M$ ayant servies à la reconstruction de la partition courante B et la matrice des données résiduelles $\varepsilon^*_1$, $\varepsilon^*_2$,...,$\varepsilon^*_P$ ayant servies à la reconstruction de la partition causale B*.

A l'issue de l'étape D6, une partition courante reconstruite modifiée $\tilde{B}$ est obtenue. Une telle partition consiste avantageusement en un raffinement de la partition reconstruite $\hat{B}$ en termes de texture.

Une fois toutes les partitions de l'image $I_N$ décodées par raffinement selon le procédé de décodage qui vient d'être décrit, il est fourni, en sortie du décodeur DO, une image $ID_N$ correspondant au décodage de l'image $I_N$, comme cela est représenté sur les **figures 3** et **4.**

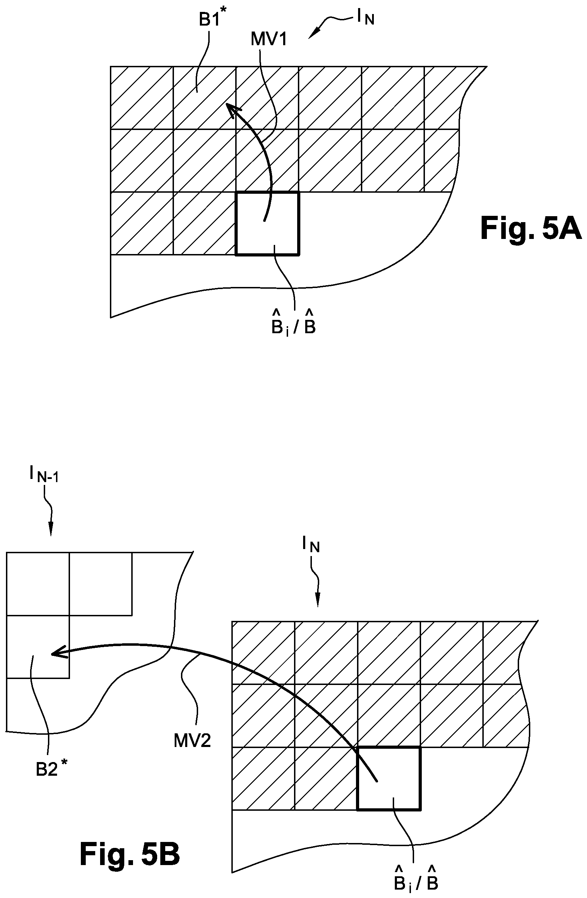

En référence maintenant aux figures **5A** à **5D,** on va maintenant décrire plusieurs modes de réalisation pour mettre en oeuvre aussi bien au codage qu'au décodage, l'étape de détermination d'au moins une partition causale $B^*_i$ ou B*.

Selon l'exemple représenté à la **figure 5A,** l'image $I_N$ est une image en deux dimensions. L'étape C6 ou D5 de détermination de partition causale consiste à rechercher dans une partie de l'image courante $I_N$ qui a déjà été décodée, ladite partie étant représentée par des hachures sur la **figure 5A,** la partition causale B1* pointée par un vecteur de mouvement MV1 associé à la partition reconstruite $\hat{B}_i$ ou $\hat{B}$, lequel vecteur a par exemple été sélectionné par compétition par le module CAL2_CO du codeur ou le module de calcul CAL1_DO du décodeur, parmi une pluralité de vecteurs de mouvement candidats. Selon cet exemple, l'estimation de mouvement est ici effectuée en Intra.

Selon l'exemple représenté à la **figure 5B,** l'image $I_N$ est toujours une image en deux dimensions. L'étape C6 ou D5 de détermination de partition causale consiste à rechercher dans une image qui a déjà été décodée, telle que par exemple l'image $I_{N-1}$ précédant immédiatement l'image courante $I_N$, la partition causale B2* pointée par un vecteur de mouvement MV2 associé à la partition reconstruite $\hat{B}_i$ ou $\hat{B}$, lequel vecteur a par exemple été sélectionné par compétition par le module CAL2_CO du codeur ou le module de calcul CAL1_DO du décodeur, parmi une pluralité de vecteurs de mouvement candidats. Selon cet exemple, l'estimation de mouvement est ici effectuée en Inter.

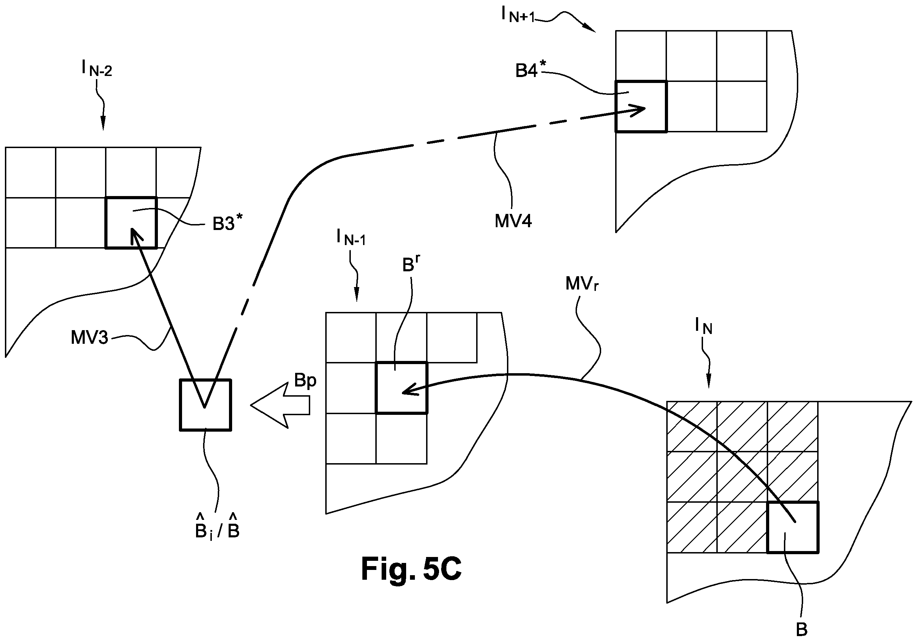

Selon l'exemple représenté à la **figure 5C,** l'image $I_N$ est toujours une image en deux dimensions. Préalablement à l'étape de détermination de partition causale, l'étape C1 ou D3 de prédiction de la partition courante B consiste en une prédiction de type Inter, au cours de laquelle il est procédé à la recherche dans une image qui a déjà été décodée, telle que par exemple l'image $I_{N-1}$ précédant immédiatement l'image courante $I_N$, d'une partition causale déjà décodée $B^r$ pointée par un vecteur de mouvement MVr associé à la partition courante B. Au décodage, le vecteur MVr est soit lu dans le signal de données F transmis au décodeur DO, soit calculé par ce dernier. Une partition courante prédite Bp est alors obtenue. Puis l'étape C5 ou D4 de reconstruction de ladite partition courante est mise en oeuvre comme décrit plus haut de façon à délivrer une partition reconstruite $\hat{B}_i$ ou $\hat{B}$ respectivement.

L'étape C6 ou D5 de détermination de partition causale consiste alors à rechercher dans une image qui a déjà été décodée, telle que par exemple l'image $I_{N-2}$ précédant immédiatement l'image $I_{N-1}$, la partition causale B3* pointée par un vecteur de mouvement MV3 associé à la partition reconstruite $\hat{B}_i$ ou $\hat{B}$, lequel vecteur a par exemple été sélectionné par compétition par le module CAL2_CO du codeur ou le module de calcul CAL1_DO du décodeur, parmi une pluralité de vecteurs de mouvement candidats.

A titre d'alternative représentée en pointillé sur la **figure 5C,** l'étape C6 ou D5 de détermination de partition causale consiste à rechercher dans une image qui a déjà été décodée, telle que par exemple l'image $I_{N+1}$ suivant immédiatement l'image courante $I_N$, la partition causale B4* pointée par un vecteur de mouvement MV4 associé à la partition reconstruite $\hat{B}_i$ ou $\hat{B}$, lequel vecteur a par exemple été sélectionné par compétition par le module CAL2_CO du codeur ou le module de calcul CAL1_DO du décodeur, parmi une pluralité de vecteurs de mouvement candidats.

Une telle disposition permet d'améliorer la compensation de mouvement appliquée à la partition courante reconstruite, puisqu'elle utilise deux paramètres de mouvement au lieu d'un seul : le vecteur mouvement MVr utilisé pour prédire la partition courante B et le vecteur mouvement MV3 ou MV4 utilisé pour déterminer la partition causale B*3 ou B*4 respectivement.

En outre, au décodage, une telle disposition présente l'avantage de ne pas entraîner d'augmentation du coût de signalisation, puisque le vecteur de mouvement MV3 ou MV4 est calculé au décodage, et non transmis dans le signal de données F.

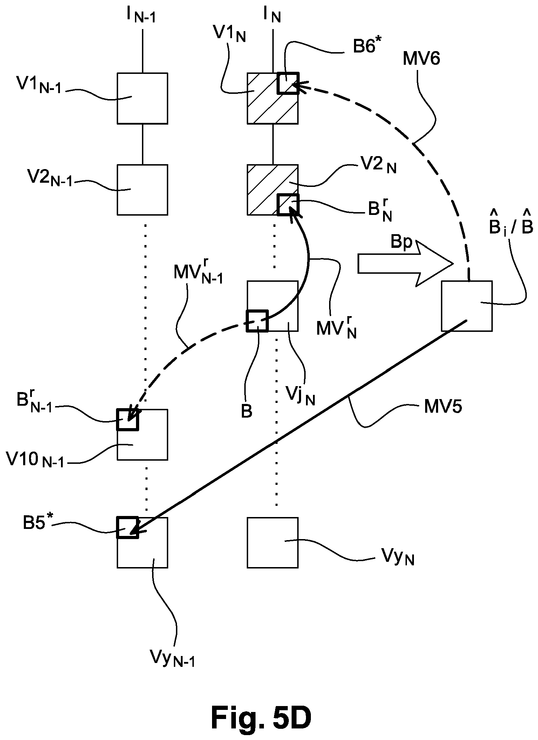

Selon l'exemple représenté à la **figure 5D,** l'image $I_N$ est une image en trois dimensions qui a été codée par exemple conformément au standard MVC. A cet effet, l'image courante $I_N$ comprend une pluralité de vues $V1_N$, $V2_N$,..., $Vy_N$ représentant respectivement une même scène.

Préalablement à l'étape C6 ou D5 de détermination de partition causale, l'étape C1 ou D3 de prédiction de la partition courante B appartenant à une vue courante $Vj_N$ de l'image courante $I_N$ consiste en une prédiction de type Inter, au cours de laquelle il est procédé à la recherche dans une vue déjà décodée de l'image courante $I_N$,

telle que par exemple la vue $V2_N$, d'une partition causale déjà décodée $B^r_N$ pointée par un vecteur de mouvement $MV^r_N$ associé à la partition courante B. Au décodage, le vecteur $MV^r_N$ est soit lu dans le signal de données F transmis au décodeur DO, soit calculé par ce dernier. Une partition courante prédite Bp est alors obtenue. Puis l'étape C5 ou D4 de reconstruction de ladite partition courante est mise en oeuvre comme décrit plus haut de façon à délivrer une partition reconstruite $\hat{B}_i$ ou $\hat{B}$ respectivement.

L'étape C6 ou D5 de détermination de partition causale consiste alors à rechercher dans une vue d'une image qui a déjà été décodée, telle que par exemple la vue $Vy_{N-1}$ de l'image $I_{N-1}$ précédant immédiatement l'image courante $I_N$, la partition causale B5* pointée par un vecteur de mouvement MV5 associé à la partition reconstruite $\hat{B}_i$ ou $\hat{B}$, lequel vecteur a par exemple été sélectionné par compétition par le module CAL2_CO du codeur ou le module de calcul CAL1_DO du décodeur, parmi une pluralité de vecteurs de mouvement candidats.

A titre d'alternative représentée en pointillé sur la **figure 5D,** préalablement à l'étape C6 ou D5 de détermination de partition causale, l'étape C1 ou D3 de prédiction de la partition courante B appartenant à une vue courante $Vj_N$ de l'image courante $I_N$ consiste en une prédiction de type Inter, au cours de laquelle il est procédé à la recherche dans une vue d'une image qui a déjà été décodée, telle que par exemple la vue $V10_{N-1}$ de l'image $I_{N-1}$ précédant immédiatement l'image courante $I_N$, d'une partition causale déjà décodée $B^r_{N-1}$ pointée par un vecteur de mouvement $MV^r_{N-1}$ associé à la partition courante B. Au décodage, le vecteur $MV^r_{N-1}$ est soit lu dans le signal de données F transmis au décodeur DO, soit calculé par ce dernier. Une partition courante prédite Bp est alors obtenue. Puis l'étape C5 ou D4 de reconstruction de ladite partition courante est mise en oeuvre comme décrit plus haut, de façon à délivrer une partition reconstruite $\hat{B}_i$ ou $\hat{B}$ respectivement.

L'étape C6 ou D5 de détermination de partition causale consiste alors à rechercher dans une vue déjà décodée de l'image courante $I_N$, telle que par exemple la vue $V1_N$ de l'image courante $I_N$, la partition causale B6* pointée par un vecteur de mouvement MV6 associé à la partition reconstruite $\hat{B}_i$ ou $\hat{B}$, lequel vecteur a par exemple été sélectionné par compétition par le module CAL2_CO du codeur ou le module de calcul CAL1_DO du décodeur, parmi une pluralité de vecteurs mouvement candidats.

Il va de soi que les modes de réalisation qui ont été décrits ci-dessus ont été donnés à titre purement indicatif et nullement limitatif.

## Revendications

1. Procédé de décodage d'un signal de données représentatif d'au moins une image ($I_N$) courante découpée en partitions, ledit procédé comprenant, pour au moins une partition courante (B) à reconstruire dans ladite image, les étapes de :

- prédiction (D3) de ladite partition courante à partir d'au moins une première partition causale déjà décodée,
- reconstruction (D4) de ladite partition courante, à partir de ladite partition courante prédite, délivrant une partition courante reconstruite ($\hat{B}$),

ledit procédé de décodage étant **caractérisé en ce qu'**il met en oeuvre, à la suite de ladite étape de reconstruction, les étapes de:

- détermination (D5) d'au moins une deuxième partition causale (B*) déjà décodée à l'aide d'une estimation de mouvement appliquée à ladite partition courante reconstruite ($\hat{B}$),
- modification (D6) de ladite partition courante reconstruite ($\hat{B}$) par calcul d'une moyenne appliquée à la fois sur ladite deuxième partition causale déterminée (B*) et sur ladite partition courante reconstruite ($\hat{B}$), délivrant une partition courante reconstruite modifiée ($\tilde{B}$).

2. Procédé de décodage selon la revendication 1, au cours duquel ladite moyenne est appliquée sur tous les pixels ou bien sur un sous-ensemble desdits pixels de la deuxième partition causale déterminée ainsi que respectivement sur tous les pixels correspondants ou bien sur un sous-ensemble desdits pixels correspondant de ladite partition courante reconstruite ($\hat{B}$).

3. Procédé de décodage selon la revendication 1, au cours duquel ladite deuxième partition causale déterminée (B*) est recherchée dans une partie décodée de l'image courante ou bien dans une autre image ayant déjà été décodée.

4. Procédé de décodage selon la revendication 3, ladite autre image déjà décodée étant une image antérieure ou postérieure à l'image courante.

5. Procédé de décodage selon la revendication 1, au cours duquel dans le cas où l'image courante comprend une pluralité de vues représentant respectivement une même scène, ladite deuxième partition causale déterminée (B*) est recherchée dans une vue déjà décodée de ladite image courante ou d'une autre image déjà décodée.

6. Procédé de codage d'au moins une image ($I_N$) découpée en partitions, mettant en oeuvre, pour une partition courante (B) à coder, les étapes de:

- prédiction (C1) de ladite partition courante à partir d'au moins une première partition causale déjà codée puis décodée,

- reconstruction (C5) de ladite partition courante à partir de ladite partition courante prédite, délivrant une partition courante reconstruite ($\hat{B}_i$),

ledit procédé de codage étant **caractérisé en ce qu'**il met en oeuvre, à la suite de ladite étape de reconstruction, les étapes de:

- détermination (C6) d'au moins une deuxième partition causale ($B^*_i$) déjà codée puis décodée à l'aide d'une estimation de mouvement appliquée à ladite partition courante reconstruite ($\hat{B}_i$),
- modification (C7) de ladite partition courante reconstruite ($\hat{B}_i$) par calcul d'une moyenne appliquée à la fois sur ladite deuxième partition causale déterminée ($B^*_i$) et sur ladite partition courante reconstruite ($\hat{B}_i$), délivrant une partition courante reconstruite modifiée ($\tilde{B}_i$).

7. Procédé de codage selon la revendication 6, au cours duquel un ensemble (EB) de données résiduelles ($\varepsilon_1$, $\varepsilon_2$,..., $\varepsilon_M$) étant obtenu à la suite de ladite étape de prédiction par comparaison de données relatives à la partition courante (B) et à ladite partition prédite, ledit procédé met en oeuvre les étapes suivantes, après la délivrance de la partition courante reconstruite modifiée ($\tilde{B}_i$):

- modification (C8) d'au moins une desdites données résiduelles dudit ensemble, délivrant un ensemble de données résiduelles modifié,
- reconstruction (C5) de ladite partition courante à partir de ladite partition courante prédite et dudit ensemble de données résiduelles modifié, délivrant une nouvelle partition courante reconstruite ($\hat{B}_{i+1}$),
- détermination (C6) d'au moins une nouvelle partition causale ($B^*_{i+1}$) déjà codée puis décodée à l'aide d'une estimation de mouvement appliquée à ladite nouvelle partition courante reconstruite ($\hat{B}_{i+1}$),
- modification (C7) de ladite nouvelle partition courante reconstruite ($\hat{B}_{i+1}$) par calcul d'une moyenne appliquée à la fois sur ladite nouvelle partition causale déterminée ($B^*_{i+1}$) et sur ladite nouvelle partition courante reconstruite ($\hat{B}_{i+1}$), délivrant une nouvelle partition courante reconstruite modifiée ($\tilde{B}_{i+1}$),
- comparaison (C9), selon un critère de similitude prédéterminé, entre au moins deux partitions choisies parmi ladite deuxième partition causale déterminée ($B^*_i$), ladite nouvelle partition causale déterminée ($B^*_{i+1}$), la partition courante (B), la partition courante reconstruite modifiée ($\tilde{B}_i$), la nouvelle partition courante reconstruite modifiée ($\tilde{B}_{i+1}$).

8. Procédé de codage selon la revendication 7, mettant en oeuvre, à la suite de ladite étape de comparaison (C9), les étapes suivantes :

- au moins une itération desdites étapes de modification (C8) d'au moins une desdites données résiduelles, de reconstruction (C5) de ladite partition courante, de détermination (C6) d'au moins une nouvelle partition causale, de modification (C7) d'une nouvelle partition reconstruite, et de comparaison (C9) de partitions,
- sélection (C10) d'une pluralité de partitions qui répondent le mieux au critère de similitude,
- choix (C11) d'une partition parmi ladite pluralité de partitions sélectionnées, selon un critère de performance de codage prédéterminé.

9. Dispositif (DO) de décodage d'un signal de données représentatif d'au moins une image découpée en partitions, comprenant, pour au moins une partition courante (B) à reconstruire dans ladite image :

- des moyens (PRED_DO) de prédiction de ladite partition courante à partir d'au moins une première partition causale déjà codée puis décodée,
- des moyens (RI) de reconstruction de ladite partition courante à partir de ladite partition courante prédite, délivrant une partition courante reconstruite ($\hat{B}$),

ledit dispositif de décodage étant **caractérisé en ce qu'**il comprend :

- des moyens (CAL1_DO) de détermination d'au moins une deuxième partition causale ($B^*$) déjà décodée à l'aide d'une estimation de mouvement appliquée à ladite partition courante reconstruite ($\hat{B}$),
- des moyens (CAL2_DO) de modification de ladite partition courante reconstruite par calcul d'une moyenne appliquée à la fois sur ladite deuxième partition causale déterminée ($B^*$) et sur ladite partition courante reconstruite ($\hat{B}$), délivrant une partition courante reconstruite modifiée ($\tilde{B}$).

10. Dispositif (CO) de codage d'au moins une image découpée en partitions, comprenant, pour une partition courante (B) à coder:

- des moyens (PRED_CO) de prédiction de ladite partition courante à partir d'au moins une première partition causale déjà codée puis décodée,
- des moyens (RI_CO) de reconstruction de ladite partition courante à partir de ladite partition courante prédite, délivrant une partition couran-

te reconstruite ($\hat{B}_i$),

ledit dispositif de codage étant **caractérisé en ce qu'**il comprend :

- des moyens (CAL2_CO) de détermination d'au moins une deuxième partition causale (B*$_i$) déjà codée puis décodée à l'aide d'une estimation de mouvement appliquée à ladite partition courante reconstruite ($\hat{B}_i$),
- des moyens (CAL3_CO) de modification de ladite partition courante reconstruite par calcul d'une moyenne appliquée à la fois sur ladite deuxième partition causale déterminée (B*$_i$) et sur ladite partition courante reconstruite ($\hat{B}_i$), délivrant une partition courante reconstruite modifiée ($\tilde{B}_i$).

11. Dispositif de codage selon la revendication 10, comprenant :

- des moyens (CAL1_CO, MTQ_CO) de comparaison de données relatives à ladite partition courante à coder (B) et à ladite partition prédite, de façon à déterminer un ensemble de données résiduelles,
- des moyens (CAL4_CO) de modification d'au moins une desdites données résiduelles dudit ensemble, délivrant un ensemble de données résiduelles modifié,
- lesdits moyens de reconstruction (RI_CO) étant activés pour reconstruire ladite partition courante à partir de ladite partition courante prédite et dudit ensemble de données résiduelles modifié, délivrant une nouvelle partition courante reconstruite ($\hat{B}_{i+1}$),
- lesdits moyens de détermination (CAL2_CO) étant activés pour déterminer au moins une nouvelle partition causale (B*$_{i+1}$) déjà codée puis décodée à l'aide d'une estimation de mouvement appliquée à ladite nouvelle partition courante reconstruite ($\hat{B}_{i+1}$),
- lesdits moyens de modification (CAL3_CO) de partition courante reconstruite étant activés pour modifier ladite nouvelle partition courante reconstruite ($\hat{B}_{i+1}$) par calcul d'une moyenne appliquée à la fois sur ladite nouvelle partition causale déterminée (B*$_{i+1}$), délivrant une nouvelle partition courante reconstruite modifiée ($\tilde{B}_{i+1}$),
- des moyens (CAL5_CO) de comparaison aptes à comparer au moins deux partitions entre elles, selon un critère de similitude prédéterminé, lesdites partitions étant choisies parmi ladite deuxième partition causale déterminée (B*$_i$), ladite nouvelle partition causale déterminée (B*$_{i+1}$), la partition courante (B), la partition courante reconstruite modifiée ($\hat{B}_i$), la nouvelle partition courante reconstruite modifiée ($\tilde{B}_{i+1}$).

12. Programme d'ordinateur comportant des instructions de code de programme pour l'exécution des étapes du procédé de décodage selon l'une quelconque des revendications 1 à 5, lorsque ledit programme est exécuté sur un ordinateur.

13. Support d'enregistrement lisible par un ordinateur sur lequel est enregistré un programme d'ordinateur comprenant des instructions de code de programme pour l'exécution des étapes du procédé de décodage selon l'une quelconque des revendications 1 à 5, lorsque ledit programme est exécuté par un ordinateur.

14. Programme d'ordinateur comportant des instructions de code de programme pour l'exécution des étapes du procédé de codage selon l'une quelconque des revendications 6 à 8, lorsque ledit programme est exécuté sur un ordinateur.

15. Support d'enregistrement lisible par un ordinateur sur lequel est enregistré un programme d'ordinateur comprenant des instructions de code de programme pour l'exécution des étapes du procédé de codage selon l'une quelconque des revendications 6 à 8, lorsque ledit programme est exécuté par un ordinateur.

**Patentansprüche**

1. Verfahren zur Dekodierung eines Signals von Daten, das für wenigstens ein aktuelles Bild ($I_N$) repräsentativ ist, welches in Partitionen aufgeteilt ist, wobei das Verfahren für wenigstens eine aktuelle Partition (B), die in dem Bild zu rekonstruieren ist, die folgenden Schritte umfasst:

- Vorhersage (D3) der aktuellen Partition ausgehend von wenigstens einer ersten kausalen Partition, die bereits dekodiert wurde,
- Rekonstruktion (D4) der aktuellen Partition aus der vorhergesagten aktuellen Partition, was eine rekonstruierte aktuelle Partition ($\hat{B}$) liefert,

wobei das Verfahren zur Dekodierung **dadurch gekennzeichnet ist, dass** im Anschluss an den Schritt der Rekonstruktion die folgenden Schritte ausgeführt werden:

- Bestimmung (D5) wenigstens einer zweiten kausalen Partition (B*), die bereits dekodiert wurde, mithilfe einer auf die rekonstruierte aktuelle Partition ($\hat{B}$) angewendeten Bewegungsschätzung,
- Modifikation (D6) der rekonstruierten aktuellen Partition ($\hat{B}$) durch Berechnung eines Mittelwertes, der gleichzeitig auf die bestimmte zweite kausale Partition (B*) und auf die rekonstruierte aktuelle Partition ($\hat{B}$) angewendet wird, was eine modifizierte rekonstruierte aktuelle Partition ($\tilde{B}$) liefert.

2. Verfahren zur Dekodierung nach Anspruch 1, bei dem der Mittelwert auf alle Pixel oder auch auf eine Teilmenge der Pixel der bestimmten zweiten kausalen Partition angewendet wird, sowie auf alle entsprechenden Pixel bzw. auf eine entsprechende Teilmenge der Pixel der rekonstruierten aktuellen Partition ($\hat{B}$).

3. Verfahren zur Dekodierung nach Anspruch 1, bei dem die bestimmte zweite kausale Partition (B*) in einem dekodierten Teil des aktuellen Bildes oder auch in einem anderen Bild, das bereits dekodiert wurde, gesucht wird.

4. Verfahren zur Dekodierung nach Anspruch 3, wobei das bereits dekodierte andere Bild ein Bild ist, das dem aktuellen Bild vorangeht oder nachfolgt.

5. Verfahren zur Dekodierung nach Anspruch 1, bei dem, falls das aktuelle Bild mehrere Ansichten umfasst, die jeweils ein und dieselbe Szene darstellen, die bestimmte zweite kausale Partition (B*) in einer bereits dekodierten Ansicht des aktuellen Bildes oder eines bereits dekodierten anderen Bildes gesucht wird.

6. Verfahren zur Kodierung wenigstens eines in Partitionen aufgeteilten Bildes ($I_N$), bei dem für eine zu kodierende aktuelle Partition (B) die folgenden Schritte ausgeführt werden:

    - Vorhersage (C1) der aktuellen Partition ausgehend von wenigstens einer ersten kausalen Partition, die bereits kodiert und dann dekodiert wurde,
    - Rekonstruktion (C5) der aktuellen Partition aus der vorhergesagten aktuellen Partition, was eine rekonstruierte aktuelle Partition ($\hat{B}_i$) liefert,

wobei das Verfahren zur Kodierung **dadurch gekennzeichnet ist, dass** im Anschluss an den Schritt der Rekonstruktion die folgenden Schritte ausgeführt werden:

    - Bestimmung (C6) wenigstens einer zweiten kausalen Partition (B*$_i$), die bereits kodiert und dann dekodiert wurde, mithilfe einer auf die rekonstruierte aktuelle Partition ($\hat{B}_i$) angewendeten Bewegungsschätzung,
    - Modifikation (C7) der rekonstruierten aktuellen Partition ($\hat{B}_i$) durch Berechnung eines Mittelwertes, der gleichzeitig auf die bestimmte zweite kausale Partition (B*$_i$) und auf die rekonstruierte

aktuelle Partition ($\hat{B}_i$) angewendet wird, was eine modifizierte rekonstruierte aktuelle Partition ($\tilde{B}_i$) liefert.

7. Verfahren zur Kodierung nach Anspruch 6, bei dem, wenn eine Menge (EB) von Restdaten ($\varepsilon_1, \varepsilon_2, ..., \varepsilon_M$) im Anschluss an den Schritt der Vorhersage durch Vergleich von Daten erhalten wird, die sich auf die aktuelle Partition (B) und die vorhergesagte Partition beziehen, gemäß dem Verfahren die folgenden Schritte ausgeführt werden, nach der Lieferung der modifizierten rekonstruierten aktuellen Partition ($\tilde{B}_i$):

    - Modifikation (C8) wenigstens eines der Restdatenelemente der Menge, was eine modifizierte Menge von Restdaten liefert,
    - Rekonstruktion (C5) der aktuellen Partition aus der vorhergesagten aktuellen Partition und der modifizierten Menge von Restdaten, was eine neue rekonstruierte aktuelle Partition ($\hat{B}_{i+1}$) liefert,
    - Bestimmung (C6) wenigstens einer neuen kausalen Partition (B*$_{i+1}$), die bereits kodiert und dann dekodiert wurde, mithilfe einer auf die neue rekonstruierte aktuelle Partition ($\hat{B}_{i+1}$) angewendeten Bewegungsschätzung,
    - Modifikation (C7) der neuen rekonstruierten aktuellen Partition ($\hat{B}_{i+1}$) durch Berechnung eines Mittelwertes, der gleichzeitig auf die bestimmte neue kausale Partition (B*$_{i+1}$) und auf die neue rekonstruierte aktuelle Partition ($\hat{B}_{i+1}$) angewendet wird, was eine neue modifizierte rekonstruierte aktuelle Partition ($\tilde{B}_{i+1}$) liefert,
    - Vergleich (C9), gemäß einem vorbestimmten Ähnlichkeitskriterium, zwischen wenigstens zwei Partitionen, die aus der bestimmten zweiten kausalen Partition (B*$_i$), der bestimmten neuen kausalen Partition (B*$_{i+1}$), der aktuellen Partition (B), der modifizierten rekonstruierten aktuellen Partition ($\tilde{B}_i$), der neuen modifizierten rekonstruierten aktuellen Partition ($\tilde{B}_{i+1}$) ausgewählt sind.

8. Verfahren zur Kodierung nach Anspruch 7, gemäß dem im Anschluss an den Schritt des Vergleichs (C9) die folgenden Schritte ausgeführt werden:

    - wenigstens eine Iteration der Schritte der Modifikation (C8) wenigstens eines der Restdatenelemente, der Rekonstruktion (C5) der aktuellen Partition, der Bestimmung (C6) wenigstens einer neuen kausalen Partition, der Modifikation (C7) einer neuen rekonstruierten Partition und des Vergleichs (C9) von Partitionen,
    - Auswahl (C10) mehrerer Partitionen, welche dem Ähnlichkeitskriterium am besten genügen,
    - Wahl (C11) einer Partition aus den mehreren ausgewählten Partitionen gemäß einem vorbestimmten Kriterium der Kodierungsleistung.

**9.** Vorrichtung (DO) zur Dekodierung eines Signals von Daten, das für wenigstens ein in Partitionen aufgeteiltes Bild repräsentativ ist, welche für wenigstens eine aktuelle Partition (B), die in dem Bild zu rekonstruieren ist, umfasst:

    - Mittel (PRED_DO) zur Vorhersage der aktuellen Partition ausgehend von wenigstens einer ersten kausalen Partition, die bereits kodiert und dann dekodiert wurde,
    - Mittel (RI) zur Rekonstruktion der aktuellen Partition aus der vorhergesagten aktuellen Partition, was eine rekonstruierte aktuelle Partition ($\hat{B}$) liefert,

wobei die Vorrichtung zur Dekodierung **dadurch gekennzeichnet ist, dass** sie umfasst:

    - Mittel (CAL1_DO) zur Bestimmung wenigstens einer zweiten kausalen Partition (B*), die bereits dekodiert wurde, mithilfe einer auf die rekonstruierte aktuelle Partition ($\hat{B}$) angewendeten Bewegungsschätzung,
    - Mittel (CAL2_DO) zur Modifikation der rekonstruierten aktuellen Partition durch Berechnung eines Mittelwertes, der gleichzeitig auf die bestimmte zweite kausale Partition (B*) und auf die rekonstruierte aktuelle Partition ($\hat{B}$) angewendet wird, was eine modifizierte rekonstruierte aktuelle Partition ($\tilde{B}$) liefert.

**10.** Vorrichtung (CO) zur Kodierung wenigstens eines in Partitionen aufgeteilten Bildes, welche für eine zu kodierende aktuelle Partition (B) umfasst:

    - Mittel (PRED_CO) zur Vorhersage der aktuellen Partition ausgehend von wenigstens einer ersten kausalen Partition, die bereits kodiert und dann dekodiert wurde,
    - Mittel (RI_CO) zur Rekonstruktion der aktuellen Partition aus der vorhergesagten aktuellen Partition, was eine rekonstruierte aktuelle Partition ($\hat{B_i}$) liefert,

wobei die Vorrichtung zur Kodierung **dadurch gekennzeichnet ist, dass** sie umfasst:

    - Mittel (CAL2_CO) zur Bestimmung wenigstens einer zweiten kausalen Partition (B*$_i$), die bereits kodiert und dann dekodiert wurde, mithilfe einer auf die rekonstruierte aktuelle Partition ($\hat{B_i}$) angewendeten Bewegungsschätzung,
    - Mittel (CAL3_CO) zur Modifikation der rekonstruierten aktuellen Partition durch Berechnung eines Mittelwertes, der gleichzeitig auf die bestimmte zweite kausale Partition (B*$_i$) und auf

die rekonstruierte aktuelle Partition ($\hat{B_i}$) angewendet wird, was eine modifizierte rekonstruierte aktuelle Partition ($\tilde{B_i}$) liefert.

**11.** Vorrichtung zur Kodierung nach Anspruch 10, welche umfasst:

    - Mittel (CAL1_CO, MTQ_CO) zum Vergleich von Daten, die sich auf die zu kodierende aktuelle Partition (B) und auf die vorhergesagte Partition beziehen, um eine Menge von Restdaten zu bestimmen,
    - Mittel (CAL4_CO) zur Modifikation wenigstens eines der Restdatenelemente der Menge, was eine modifizierte Menge von Restdaten liefert,
    - wobei die Mittel zur Rekonstruktion (RI_CO) aktiviert werden, um die aktuelle Partition aus der vorhergesagten aktuellen Partition und der modifizierten Menge von Restdaten zu rekonstruieren, was eine neue rekonstruierte aktuelle Partition ($\hat{B}_{i+1}$) liefert,
    - wobei die Mittel zur Bestimmung (CAL2_CO) aktiviert werden, um wenigstens eine neue kausale Partition (B*$_{i+1}$), die bereits kodiert und dann dekodiert wurde, mithilfe einer auf die neue rekonstruierte aktuelle Partition ($\hat{B}_{i+1}$) angewendeten Bewegungsschätzung zu bestimmen,
    - wobei die Mittel zur Modifikation (CAL3_CO) der rekonstruierten aktuellen Partition aktiviert werden, um die neue rekonstruierte aktuelle Partition ($\hat{B}_{i+1}$) durch Berechnung eines Mittelwertes zu modifizieren, der gleichzeitig auf die bestimmte neue kausale Partition (B*$_{i+1}$) angewendet wird, was eine neue modifizierte rekonstruierte aktuelle Partition ($\tilde{B}_{i+1}$) liefert,
    - Mittel (CAL5_CO) zum Vergleich, die geeignet sind, wenigstens zwei Partitionen gemäß einem vorbestimmten Ähnlichkeitskriterium miteinander zu vergleichen, die aus der bestimmten zweiten kausalen Partition (B*$_i$), der bestimmten neuen kausalen Partition (B*$_{i+1}$), der aktuellen Partition (B), der modifizierten rekonstruierten aktuellen Partition ($\tilde{B}_i$), der neuen modifizierten rekonstruierten aktuellen Partition ($\tilde{B}_{i+1}$) ausgewählt sind.

**12.** Computerprogramm, welches Programmcodeanweisungen zur Durchführung der Schritte des Verfahrens zur Dekodierung nach einem der Ansprüche 1 bis 5, wenn das Programm auf einem Computer ausgeführt wird, umfasst.

**13.** Computerlesbares Aufzeichnungsmedium, auf welchem ein Computerprogramm aufgezeichnet ist, das Programmcodeanweisungen zur Durchführung der Schritte des Verfahrens zur Dekodierung nach einem der Ansprüche 1 bis 5, wenn das Programm von einem Computer ausgeführt wird, umfasst.

14. Computerprogramm, welches Programmcodeanweisungen zur Durchführung der Schritte des Verfahrens zur Kodierung nach einem der Ansprüche 6 bis 8, wenn das Programm auf einem Computer ausgeführt wird, umfasst.

15. Computerlesbares Aufzeichnungsmedium, auf welchem ein Computerprogramm aufgezeichnet ist, das Programmcodeanweisungen zur Durchführung der Schritte des Verfahrens zur Kodierung nach einem der Ansprüche 6 bis 8, wenn das Programm von einem Computer ausgeführt wird, umfasst.


**Claims**

1. Method for decoding a data signal representing at least one current image ($I_N$) split up into partitions, said method comprising, for at least one current partition (B) to be reconstructed in said image, the steps of:

     - prediction (D3) of said current partition from at least one already decoded first causal partition,
     - reconstruction (D4) of said current partition, from said predicted current partition, delivering a reconstructed current partition ($\hat{B}$),

   said decoding method being **characterized in that** it implements, following said reconstruction step, the steps of:

     - determination (D5) of at least one already decoded second causal partition (B*) using a motion estimation applied to said reconstructed current partition ($\hat{B}$),
     - modification (D6) of said reconstructed current partition ($\hat{B}$) by calculation of an average applied both to said determined second causal partition (B*) and to said reconstructed current partition ($\hat{B}$), delivering a modified reconstructed current partition ($\tilde{B}$).

2. Decoding method according to Claim 1, during which said average is applied to all the pixels or else to a sub-set of said pixels of the determined second causal partition and to all the corresponding pixels respectively or else to a sub-set of said corresponding pixels of said reconstructed current partition ($\hat{B}$).

3. Decoding method according to Claim 1, during which said determined second causal partition (B*) is sought in a decoded part of the current image or else in another image having already been decoded.

4. Decoding method according to Claim 3, said other already decoded image being an earlier or later image than the current image.

5. Decoding method according to Claim 1, during which in the case where the current image comprises a plurality of views representing one and the same scene respectively, said determined second causal partition (B*) is sought in an already decoded view of said current image or in another already decoded image.

6. Method for coding at least one image ($I_N$) split up into partitions, implementing, for a current partition (B) to be coded, the steps of:

     - prediction (C1) of said current partition from at least one already coded then decoded first causal partition,
     - reconstruction (C5) of said current partition from said predicted current partition, delivering a reconstructed current partition ($\hat{B}_i$),

   said coding method being **characterized in that** it implements, following said reconstruction step, the steps of:

     - determination (C6) of at least one already coded then decoded second causal partition (B*$_i$) using a motion estimation applied to said reconstructed current partition ($\hat{B}_i$),
     - modification (C7) of said reconstructed current partition ($\hat{B}_i$) by calculation of an average applied both to said determined causal partition (B*$_i$) and to said reconstructed current partition ($\hat{B}_i$), delivering a modified reconstructed current partition ($\tilde{B}_i$).

7. Coding method according to Claim 6, during which a set (EB) of residual data ($\varepsilon_1$, $\varepsilon_2$,..., $\varepsilon_M$) being obtained following said prediction step by comparison of data relating to the current partition (B) and to said predicted partition, said method implements the following steps, after the delivering the modified reconstructed current partition ($\tilde{B}_i$):

     - modification (C8) of at least one of said residual data of said set, delivering a modified set of residual data,
     - reconstruction (C5) of said current partition from said predicted current partition and from said modified set of residual data, delivering a new reconstructed current partition ($\hat{B}_{i+1}$),
     - determination (C6) of at least one new already coded then decoded causal partition (B*$_{i+1}$) using a motion estimation applied to said new reconstructed current partition ($\hat{B}_{i+1}$),
     - modification (C7) of said new reconstructed current partition ($\hat{B}_{i+1}$) by calculation of an average applied both to said new determined causal partition (B*$_{i+1}$) and to said new reconstructed current partition ($\hat{B}_{i+1}$), delivering a new modified

reconstructed current partition ($\tilde{B}_{i+1}$),

- comparison (C9), according to a predetermined criterion of similarity, between at least two partitions chosen from among said determined second causal partition ($B^*_i$), said new determined causal partition ($B^*_{i+1}$), the current partition (B), the modified reconstructed current partition ($\tilde{B}_i$), and the new modified reconstructed current partition ($\tilde{B}_{i+1}$).

8. Coding method according to Claim 7, implementing, following said comparison step (C9), the following steps :

    - at least one iteration of said steps of modification (C8) of at least one of said residual data, of reconstruction (C5) of said current partition, of determination (C6) of at least one new causal partition, of modification (C7) of a new reconstructed partition, and of comparison (C9) of partitions,
    - selection (C10) of a plurality of partitions that best meet the criterion of similarity,
    - choice (C11) of a partition from among said plurality of selected partitions, according to a predetermined criterion of coding performance.

9. Device (DO) for decoding a data signal representing at least one image split up into partitions, comprising, for at least one current partition (B) to be reconstructed in said image:

    - means (PRED_DO) for predicting said current partition from at least one already coded then decoded first causal partition,
    - means (RI) for reconstructing said current partition from said predicted current partition, delivering a reconstructed current partition ($\hat{B}_i$),

said decoding device being **characterized in that** it comprises:

    - means (CAL1_DO) for determining at least one already decoded second causal partition (B*) using a motion estimation applied to said reconstructed current partition ($\hat{B}_i$),
    - means (CAL2_DO) for modifying said reconstructed current partition by calculation of an average applied both to said determined second causal partition (B*) and to said reconstructed current partition ($\hat{B}$), delivering a modified reconstructed current partition ($\hat{B}$).

10. Device (CO) for coding at least one image split up into partitions, comprising, for a current partition (B) to be coded:

    - means (PRED_CO) for predicting said current partition from at least one already coded then decoded first causal partition,

    - means (RI_CO) for reconstructing said current partition from said predicted current partition, delivering a reconstructed current partition ($\hat{B}_i$).

said coding device being **characterized in that** it comprises:

    - means (CAL2_CO) for determining at least one already coded then decoded second causal partition (B*_i) using a motion estimation applied to said reconstructed current partition ($\hat{B}_i$),
    - means (CAL3_CO) for modifying said reconstructed current partition by calculation of an average applied both to said determined causal partition (B*_i) and to said reconstructed current partition ($\hat{B}_i$), delivering a modified reconstructed current partition ($\tilde{B}_i$).

11. Coding device according to Claim 10, comprising:

    - means (CAL1_CO, MTQ_CO) for comparing data relating to said current partition (B) to be coded and to said predicted partition, so as to determine a set of residual data,
    - means (CA4_CO) for modifying at least one of said residual data of said set, delivering a modified set of residual data,
    - said reconstruction means (RI_CO) being activated to reconstruct said current partition from said predicted current partition and from said modified set of residual data, delivering a new reconstructed current partition ($\hat{B}_{i+1}$),
    - said determination means (CAL2_CO) being activated to determine at least one new already coded then decoded causal partition (B*_{i+1}) using a motion estimation applied to said new reconstructed current partition ($\hat{B}_{i+1}$),
    - said means (CAL3_CO) for modifying the reconstructed current partition being activated to modify said new reconstructed current partition ($\hat{B}_{i+1}$) by calculation of an average applied both to said new determined causal partition (B*_{i+1}), delivering a new modified reconstructed current partition ($\tilde{B}_{i+1}$),
    - comparison means (CAL5_CO) suitable for comparing at least two partitions with each other, according to a predetermined criterion of similarity, said partitions being chosen from among said determined second causal partition (B*_i), said new determined casual partition (B*_{i+1}), the current partition (B), the modified reconstructed current partition ($B_i$), and the new modified reconstructed current partition ($\tilde{B}_{i+1}$).

12. Computer program including program code instructions for the execution of the steps of the decoding method according to any one of Claims 1 to 5, when said program is executed on a computer.

13. Computer-readable recording medium on which is recorded a computer program comprising program code instructions for the execution of the steps of the decoding method according to any one of Claims 1 to 5, when said program is executed by a computer.

14. Computer program including program code instructions for the execution of the steps of the coding method according to any one of Claims 6 to 8, when said program is executed on a computer.

15. Computer-readable recording medium on which is recorded a computer program comprising program code instructions for the execution of the steps of the coding method according to any one of Claims 6 to 8, when said program is executed by a computer.

**Fig. 1**

Fig. 2

**Fig. 3**

F

| DEC. ENTR. | — D1 |

$\varepsilon_1, \varepsilon_2, ..., \varepsilon_M$

| TRANSF. + QUANT. INV. | — D2 |

$d_1, d_2, ..., d_L$

| PREDICTION PARTITION COUR. B | — D3 |

Bp

| RECONSTRUCTION B | — D4 |

$\hat{B}$

| ESTIMATION MVT. | — D5 |

$B^*$

| $f(\hat{B}, \hat{B}_i, B_i^*)$ | — D6 |

$\tilde{B}$

$ID_N$

# Fig. 4

**Fig. 5A**

**Fig. 5B**

Fig. 5C

**Fig. 5D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009071803 A

**Littérature non-brevet citée dans la description**

- **M. UEDA ; S. FUKUSHIMA.** TE1: Refinement Motion Compensation using Decoder-side Motion Estimation. *JCTVC-B032,* Juillet 2010